# DEMANDE DE BREVET EUROPEEN

(11) **EP 4 749 164 A1**
(43) Date de publication de la demande: **27.05.2026**
(21) Numéro de dépôt: 25216296.1
(22) Date de dépôt: 17.11.2025
(51) Int. Cl.: F16H 63/34

(54) **DISPOSITIF DE VERROUILLAGE DE STATIONNEMENT**

(30) Priorité: 25.11.2024 FR 2412911
(71) Demandeur: VALEO EMBRAYAGES, 80009 Amiens (FR)
(72) Inventeur: LEBAS, Gilles, 80009 AMIENS (FR); PATAUT, Pierre, 80009 AMIENS (FR); VERHOOG, Roel, 80009 AMIENS (FR)
(74) Mandataire: Valeo Powertrain Systems

(57) **Abrégé**

L'invention concerne un dispositif (1) de verrouillage de stationnement pour un véhicule, comportant :
- un actionneur principal (2) de type électromagnétique,
- un actionneur de blocage (6) de type électromagnétique, comportant un plongeur de blocage (7) configuré pour, d'une part, coopérer, dans au moins une position de blocage, avec le plongeur principal (3) et, d'autre part, dans une position déverrouillée, se désengager du plongeur principal (3),
- un dispositif anti-rotation (10) configuré pour empêcher la rotation du plongeur principal (3) sur lui-même.

## Description

La présente invention a pour objet un dispositif de verrouillage de stationnement, notamment pour un véhicule électrique.

On connaît par la demande de brevet EP3726099 un dispositif de verrouillage de stationnement pour un véhicule automobile à entraînement par moteur électrique. Ce dispositif de verrouillage de stationnement comprend une roue de verrouillage de stationnement qui est solidaire en rotation d'un arbre dans la chaîne cinématique et qui présente de multiples évidements. Il est prévu un élément de verrouillage qui est mobile entre une position fermée et une position ouverte le long d'une trajectoire de déplacement et qui, dans la position fermée, s'engage par complémentarité de forme dans un évidement de la roue de verrouillage de stationnement et, en position ouverte, est hors de prise avec les évidements de la roue de verrouillage de stationnement. Le dispositif comprend encore un actionneur de verrouillage de stationnement qui est en liaison active avec l'élément de verrouillage et par lequel l'élément de verrouillage est déplaçable entre la position fermée et la position ouverte le long de sa trajectoire de déplacement. Il est prévu que la trajectoire de l'élément de verrouillage soit par exemple rectiligne.

Un dispositif de verrouillage de stationnement de ce type a pour but, en position fermée, d'empêcher le véhicule de rouler accidentellement lors d'un stationnement.

L'invention vise à proposer un dispositif de verrouillage de stationnement qui soit simple, donc relativement peu coûteux, mais tout aussi fiable.

L'invention a ainsi pour objet un dispositif de verrouillage de stationnement pour un véhicule, notamment pour véhicule automobile à entraînement par moteur électrique, ce dispositif de verrouillage de stationnement étant apte à coopérer avec une roue de verrouillage de stationnement qui est solidaire en rotation d'un arbre d'une chaîne cinématique et qui présente une alternance de dents et de creux, et ce dispositif de verrouillage de stationnement comportant :
- un actionneur principal de type électromagnétique, comportant un plongeur principal configuré pour être déplacé dans un champ magnétique généré par une bobine de l'actionneur principal, le plongeur principal étant configuré pour être déplacé, suivant un axe de déplacement de ce plongeur principal, entre une position ouverte dans laquelle le plongeur principal laisse dégagée la roue et une position fermée dans laquelle le plongeur principal provoque le blocage de la roue,
- un actionneur de blocage de type électromagnétique, comportant un plongeur de blocage configuré pour être déplacé dans un champ magnétique généré par une bobine de l'actionneur de blocage, le plongeur de blocage étant configuré pour, d'une part, coopérer, dans au moins une position de blocage, avec le plongeur principal ou un éventuel levier actionné par le plongeur principal pour bloquer ce plongeur principal ou cet éventuel levier notamment dans la position fermée, et, d'autre part, dans une position déverrouillée, se désengager du plongeur principal ou de cet éventuel levier, cet éventuel levier comportant un deuxième doigt configuré pour être déplacé dans un creux de la roue pour bloquer la roue dans la position fermée du plongeur principal, et lorsque le plongeur principal est dans la position ouverte, le levier laisse dégagée la roue,
- un dispositif anti-rotation configuré pour empêcher la rotation du plongeur principal sur lui-même.

L'utilisation de deux actionneurs de type électromagnétique, notamment des solénoïdes, présente l'avantage d'un coût réduit. Cela est rendu possible par le fait que la fermeture du dispositif de verrouillage de stationnement s'effectue uniquement lorsque le véhicule est à l'arrêt. L'arrêt en rotation offre également un avantage en facilitant la coopération mécanique entre le plongeur d'actionnement et le plongeur de blocage.

Selon l'un des aspects de l'invention, le plongeur de blocage est configuré pour coopérer, dans deux positions de blocage distinctes, avec le plongeur principal pour le bloquer respectivement dans sa position ouverte et sa position fermée.

Ces deux positions de blocage distinctes comprennent notamment une position basse et une position haute du plongeur principal.

Selon l'un des aspects de l'invention, le plongeur principal comprend des première et deuxième formes, notamment deux rainures ou deux trous, distantes suivant l'axe de déplacement de ce plongeur principal, chaque forme correspond à l'une des deux positions de blocage du plongeur de blocage sur le plongeur principal. Le plongeur de blocage coopère avec ces formes lorsque le plongeur de blocage se trouve dans l'une ou l'autre des positions de blocage. Notamment le plongeur de blocage comporte une tête configurée pour s'engager dans l'une de ces formes du plongeur principal en position de blocage.

Selon l'un des aspects de l'invention, le dispositif anti-rotation comprend une troisième forme, notamment une gorge, sur le plongeur principal configurée pour coopérer avec une quatrième forme d'une pièce fixe, notamment un pion fixe, de sorte que le plongeur principal puisse être déplacé par la bobine de l'actionneur principal sans permettre une rotation sur lui-même. Ainsi, la fonction d'anti-rotation peut être réalisée par l'utilisation de formes entre le plongeur principal et une pièce fixe appartenant par exemple à un solénoïde, un carter support des solénoïdes, ou être un rivet rapporté. Le dispositif anti-rotation peut être configuré pour jouer le rôle d'anti-rotation sur toute la course ou seulement sur une partie de la course de déplacement de ce plongeur principal, entre sa position ouverte et sa position fermée.

Selon l'un des aspects de l'invention, le dispositif anti-rotation est configuré pour permettre une certaine flexibilité de l'anti-rotation de l'ordre de quelques degrés autour de l'axe de déplacement du plongeur principal, par exemple de 0.5° à 10°, qui permet de rattraper des défauts de réalisation des différents éléments.

Selon l'un des aspects de l'invention, le plongeur principal est une pièce rigide monobloc.

Ainsi, le plongeur principal présente une conception simple et économique, en permettant d'intégrer sur une même pièce les formes associées aux fonctions d'anti-rotation et de blocage en position basse et/ou haute.

Selon l'un des aspects de l'invention, le plongeur de blocage est lui-même maintenu, lorsque l'actionneur de blocage n'est pas alimenté électriquement, en position de blocage par un effort axial suivant un axe de déplacement de ce plongeur de blocage, l'effort axial étant notamment généré par un ressort. Lorsque le plongeur principal se trouve en position indéterminée, le plongeur de blocage s'il n'est pas alimenté peut attendre que le plongeur principal glisse vers sa position ouverte ou fermée avant de translater en position de blocage.

Selon l'un des aspects de l'invention, le plongeur principal comporte un premier doigt configuré pour être déplacé dans un creux de la roue pour bloquer la roue dans la position fermée.

Selon l'un des aspects de l'invention, le premier doigt est réalisé dans le prolongement d'un corps du plongeur principal, notamment dans la même matière que le corps du plongeur principal ou le plongeur principal est formée de plusieurs parties en matériaux différents, les plusieurs parties étant solidaires entre elles, par exemple avec un matériau pour la partie électromagnétique et un matériau différent pour le premier doigt qui doit notamment résister à des pressions de contact élevées. Selon l'un des aspects de l'invention, le plongeur de blocage est formé de plusieurs parties en matériaux différents, les plusieurs parties étant solidaires entre elles, par exemple avec un matériau pour la partie électromagnétique et un matériau différent pour la tête qui doit notamment résister à des pressions de contact élevées.

Dans ce mode de réalisation, le plongeur principal coopère directement avec la roue.

Selon l'un des aspects de l'invention, le premier doigt du plongeur principal présente une forme tronconique.

En variante, le premier doigt du plongeur principal qui est configuré pour s'engager sur la roue présente une forme allongée suivant l'axe de rotation de la roue, cette forme étant notamment de type prismatique.

Dans ce cas, le dispositif anti-rotation est configuré pour maintenir le premier doigt de forme allongée parallèlement au creux de la roue qui présente également une forme allongée complémentaire.

On évite ainsi que le premier doigt de forme allongée ne tourne à droite ou à gauche et ne se retrouve désaligné avec le creux de la roue.

Un tel désalignement pourrait empêcher le premier doigt de s'engager dans le creux.

Un autre avantage de la forme prismatique est qu'elle permet d'établir le contact entre le premier doigt et la roue sur une relativement grande surface. Cela réduit la pression de contact, améliorant ainsi la résistance mécanique de l'ensemble.

Selon un autre des aspects de l'invention, le plongeur principal est configuré pour coopérer avec un levier qui comporte un deuxième doigt configuré pour être déplacé dans un creux de la roue pour bloquer la roue dans la position fermée du plongeur principal, et lorsque le plongeur principal est dans la position ouverte, le levier laisse dégagée la roue.

Dans ce cas, le plongeur principal ne coopère pas directement avec la roue, mais le levier sert d'intermédiaire entre le plongeur principal et la roue.

Un avantage de cette configuration est la création d'un bras de levier qui permet, pour un même déplacement du deuxième doigt du levier, de réduire le déplacement du plongeur principal. Cela permet une réduction du coût du solénoïde d'actionnement du plongeur principal.

Selon l'un des aspects de l'invention, le levier d'actionnement permet un bras de levier compris entre 0,5 et 5.

Selon l'un des aspects de l'invention, le levier présente une forme allongée suivant un axe d'allongement et le levier est configuré pour être placé avec son axe d'allongement de manière sensiblement orthogonale à l'axe de rotation de la roue.

Selon l'un des aspects de l'invention, le levier présente un axe de pivotement qui est configuré pour être placé sensiblement parallèle à l'axe de rotation de la roue.

En variante, l'axe de pivotement du levier est configuré pour être placé sensiblement orthogonalement à l'axe de rotation de la roue.

Selon l'un des aspects de l'invention, le levier présente un axe de pivotement et le plongeur principal est configuré pour venir en appui dans une zone d'appui centrale du levier, entre l'axe de pivotement et le deuxième doigt du levier. Selon l'un des aspects de l'invention, le deuxième doigt est à une extrémité de la forme allongée du levier.

La course du deuxième doigt peut déterminer la course du plongeur principal en plaçant celui-ci le long du levier (ou bras articulé). Il peut être avantageux d'augmenter le bras de levier pour réduire la course du solénoïde principal.

En variante, le plongeur principal est configuré pour venir en appui dans une zone d'appui d'extrémité du levier, de sorte que l'axe de pivotement du levier soit entre cette zone d'appui et le deuxième doigt.

Selon l'un des aspects de l'invention, le deuxième doigt du levier présente une forme tronconique.

En variante, le deuxième doigt du levier qui est configuré pour s'engager sur la roue présente une forme allongée suivant l'axe de rotation de la roue, cette forme étant notamment de type prismatique.

Dans ce cas, le levier est avantageusement configuré pour maintenir le deuxième doigt de forme allongée du levier parallèlement au creux de la roue qui présente également une forme allongée complémentaire.

On évite ainsi que le deuxième doigt de forme allongée ne tourne à droite ou à gauche et ne se retrouve désaligné avec le creux de la roue.

Un tel désalignement pourrait empêcher le deuxième doigt de s'engager dans le creux.

Selon un autre des aspects de l'invention, le plongeur de blocage est configuré pour coopérer, en position de blocage, avec le levier, notamment par complémentarité de formes.

Selon l'un des aspects de l'invention, l'actionneur principal et/ou l'actionneur de blocage sont de type normalement fermé, à savoir qu'en l'absence d'alimentation électrique, l'actionneur a tendance à déplacer, si c'est l'actionneur principal, le plongeur principal en position fermée, ou, si c'est l'actionneur de blocage, à déplacer le plongeur de blocage dans les positions de blocage.

Selon l'un des aspects de l'invention, à la fois l'actionneur principal et l'actionneur de blocage sont de type normalement fermé.

Selon l'un des aspects de l'invention, pour l'actionneur principal et/ou l'actionneur de blocage de type normalement fermé, l'actionneur comprend un ressort, notamment un ressort axial, lié au plongeur qui exerce sur le plongeur un effort mécanique permanent en vue de le déplacer en position fermée/ position de blocage.

Cet effort mécanique permet de fermer le dispositif de verrouillage de stationnement en poussant le premier doigt ou le deuxième doigt dans un creux de la roue.

Avec un actionneur principal de type normalement fermé, lorsque l'on se trouve au sommet d'une dent, le plongeur principal va se trouver entre les deux positions extrêmes, à savoir entre la position ouverte et la position fermée, puisque la roue n'est pas verrouillée, et le ressort permet de mémoriser l'information et attendre que la roue tourne pour que le dispositif se verrouille.

Ainsi on peut sortir du véhicule après avoir coupé le contact, et mécaniquement les deux ressorts permettent au dispositif de verrouillage de stationnement de se verrouiller mécaniquement sans avoir besoin d'une alimentation électrique.

Ceci permet de garantir des positions maîtrisées et sans consommation électrique superflue.

En variante, à la fois l'actionneur principal et l'actionneur de blocage sont de type normalement ouvert, à savoir à savoir qu'en l'absence d'alimentation électrique, l'actionneur a tendance à déplacer, si c'est l'actionneur principal, le plongeur principal en position ouverte, ou, si c'est l'actionneur de blocage, à déplacer le plongeur de blocage dans la position déverrouillée.

Selon l'un des aspects de l'invention, le premier doigt ou le deuxième doigt apte à être en contact avec les dents de la roue peut avoir une forme en coin (ou forme « non-dégageante »), permettant que la roue retienne par frottement le doigt du plongeur principal ou du levier en position fermée afin d'éviter de solliciter mécaniquement le plongeur principal et en particulier le plongeur de blocage. La forme en coin est caractérisée par un angle α compris entre 0 et 30°, de préférence 6°. L'angle α est défini entre une facette du premier doigt ou le deuxième doigt en appui sur les dents (notamment un appui plan sur plan) et l'axe de déplacement du plongeur principal.

Dans une variante, le premier doigt ou le deuxième doigt apte à être en contact avec les dents de la roue présente une forme en coin et la forme en coin est caractérisée par un angle α compris entre 2° et -15°, de préférence étant égal 0°. Un angle α relativement faible, notamment proche de 0 ou moins, entre 2° et -15° par exemple, de préférence 0°, permettra d'éviter l'ouverture du plongeur principal sous l'effort tangent et permettra un dégagement sous faible effort du plongeur de blocage (uniquement les efforts de frottement et les efforts dynamiques liés à l'inertie du plongeur de blocage) tout en protégeant le plongeur de blocage d'un effort tangent pouvant le cisailler ou l'endommager.

Selon l'un des aspects de l'invention, le centre de gravité du levier est sur l'axe de pivotement du levier pour que le centre de gravité du levier soit sur une ligne neutre.

Selon l'un des aspects de l'invention, l'axe de pivotement est formé par un organe de contour externe circulaire, et le centre de gravité du levier est positionné à l'intérieur de ce contour externe circulaire.

Ceci permet que, si le levier reçoit un choc ou une accélération, le levier ne se met pas à tourner, ce qui est une sécurité. On gère ainsi le placement du centre de gravité pour que le levier ne puisse pas s'ouvrir tout seul en cas de choc accidentel.

Selon l'un des aspects de l'invention, le dispositif de verrouillage de stationnement est configuré pour empêcher le verrouillage pour des vitesses de roulage du véhicule au-delà d'un seuil, notamment un seuil de 4 km/h. Ceci peut être géré de manière électronique, grâce notamment à des capteurs. Les capteurs peuvent être des capteurs du dispositif de verrouillage ou, de préférence, des capteurs du véhicule (en dehors dispositif de verrouillage).

Ces capteurs permettent par exemple de connaître la vitesse du véhicule et pour connaître à quel moment on peut verrouiller ou non.

Chaque actionneur est contrôlé en position par des capteurs physiques (contacteurs, capteurs à effet Hall, etc.) ou par un contrôle indirect basé sur des mesures physiques de l'électroaimant de l'actionneur (courant, induction, etc.).

Selon l'un des aspects de l'invention, l'actionneur principal et l'actionneur de blocage sont commandés de manière indépendante, par deux électroniques de commande différentes par exemple. L'électronique de commande peut être localisée dans une électronique centralisée extérieure au dispositif de verrouillage de stationnement ou, en variante, être localisée dans le dispositif de verrouillage de stationnement lui-même.

Selon l'un des aspects de l'invention, les deux actionneurs peuvent être formés par un module commun, étant notamment placés dans un même boîtier du module commun ou étant solidarisé l'un à l'autre pour former le module commun. Ceci peut faciliter les opérations de transport et/ou d'assemblage.

L'invention a encore pour objet un système comportant :
- une roue de verrouillage de stationnement qui est solidaire en rotation d'un arbre d'une chaîne cinématique et qui présente une alternance de dents et de creux,
- un dispositif de verrouillage de stationnement tel que décrit plus haut, dont le plongeur principal est pour être déplacé entre la position ouverte dans laquelle le plongeur principal laisse dégagée la roue et une position fermée laquelle le plongeur principal provoque le blocage de la roue.

Selon l'un des aspects de l'invention, le système est configuré pour être monté dans un véhicule à entraînement par moteur électrique.

Le système peut être à l'intérieur ou l'extérieur d'un carter d'un réducteur d'une boîte de vitesses. Le système selon l'invention peut être étanche à l'huile de boîte de vitesses ou être lubrifié par cette huile.

Le module précité peut être fixé à l'intérieur ou à l'extérieur du carter.

Selon l'un des aspects de l'invention, la boîte de vitesses comporte un jeu d'engrenages comportant un arbre d'entrée coopérant avec un arbre rotor du moteur électrique. La roue du système est liée en rotation à l'arbre d'entrée.

L'invention a encore pour objet une boîte de vitesses comportant un réducteur et un système tel que précité.

D'autres caractéristiques, détails et avantages de l'invention ressortiront plus clairement à la lecture de la description qui suit d'une part, et d'exemples de réalisation donnés à titre indicatif et non limitatif en référence au dessin schématique annexé d'autre part, sur lequel :
La figure 1 est une représentation schématique d'un système selon un exemple de mise en œuvre de l'invention ;
La figure 2 est une représentation schématique d'un système selon un autre exemple de mise en œuvre de l'invention ;
La figure 3 est une représentation schématique d'une vue en coupe du plongeur principal du système de la figure 1 ou de la figure 2, selon un exemple de réalisation de l'invention ;
La figure 4 est une représentation schématique d'une vue en coupe du plongeur principal du système de la figure 1 ou de la figure 2, selon encore un exemple de réalisation de l'invention ;
La figure 5 est une représentation schématique d'une vue en coupe du plongeur principal du système de la figure 1 ou de la figure 2, selon encore un exemple de réalisation de l'invention ;
La figure 6 est une représentation schématique d'une vue en coupe du plongeur principal du système de la figure 1 ou de la figure 2, selon encore un exemple de réalisation de l'invention.

Les caractéristiques, variantes et les différentes formes de réalisation de l'invention peuvent être associées les unes avec les autres, selon diverses combinaisons, dans la mesure où elles ne sont pas incompatibles ou exclusives les unes par rapport aux autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique et/ou pour différencier l'invention par rapport à l'état de la technique antérieur.

Par ailleurs, les adjectifs numéraux ordinaux sont utilisés pour différencier les caractéristiques. Ils ne définissent pas la position d'une caractéristique. Par conséquent, par exemple, une troisième caractéristique d'un produit ne signifie pas que le produit possède une première et/ou une deuxième caractéristique.

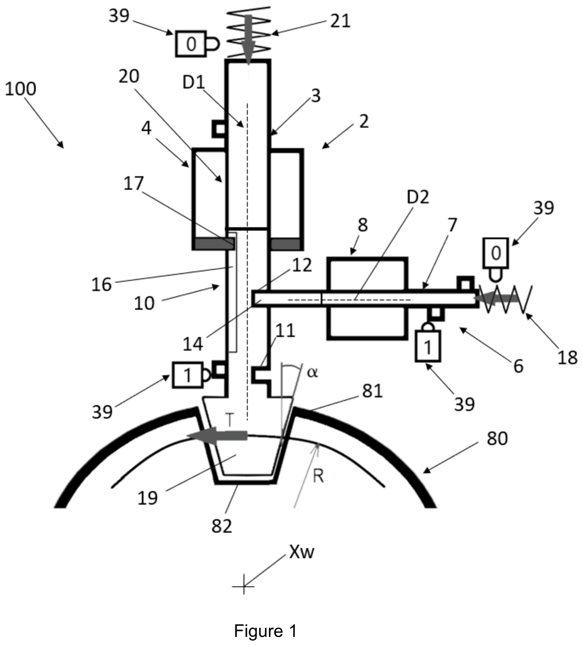

On a représenté, sur la figure 1, un système 100 selon un exemple de réalisation de l'invention, qui comporte une roue 80 de verrouillage de stationnement qui est solidaire en rotation d'un arbre d'une chaîne cinématique (non représentée) dans un véhicule automobile à entraînement par moteur électrique.

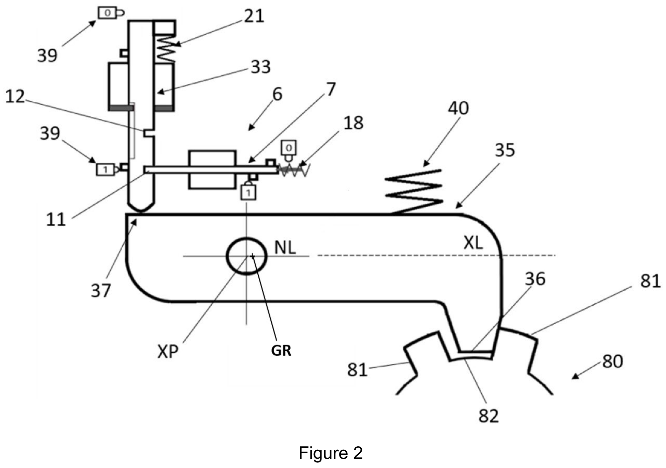

La roue 80 de verrouillage de stationnement comprend une alternance de dents 81 et de creux 82, comme cela est représentée manière simplifiée sur la figure 1 (ou cela étant mieux visible sur la figure 2).

Le système 100 comprend en outre un dispositif 1 de verrouillage de stationnement tel que décrit plus bas.

Le système 100 peut être à l'intérieur ou l'extérieur d'un carter d'un réducteur d'une boîte de vitesses. Le système 100 selon l'invention peut être étanche à l'huile de boîte de vitesses ou être lubrifié par cette huile.

Le dispositif 1 de verrouillage de stationnement comporte un actionneur principal 2 de type électromagnétique, comportant un plongeur principal 3 configuré pour être déplacé dans un champ magnétique généré par une bobine 4 de l'actionneur principal 2, le plongeur principal 3 étant configuré pour être déplacé, suivant un axe de déplacement D1 de ce plongeur principal 3, entre une position ouverte dans laquelle le plongeur principal 3 laisse dégagée la roue 80 et une position fermée, illustrée sur la figure 1, dans laquelle le plongeur principal 3 provoque le blocage de la roue 80,

Dans ladite position ouverte, le plongeur principal 3 est remonté par rapport à la roue 80, et n'est pas en contact avec la roue 80.

Le dispositif 1 de verrouillage de stationnement comporte en outre un actionneur de blocage 6 de type électromagnétique, comportant un plongeur de blocage 7 configuré pour être déplacé dans un champ magnétique généré par une bobine 8 de l'actionneur de blocage 6, le plongeur de blocage 7 étant configuré pour, d'une part, coopérer, dans au moins une position de blocage, avec le plongeur principal 3 pour le bloquer notamment dans sa position fermée, et, d'autre part, dans une position déverrouillée, se désengager du plongeur principal 3. Le plongeur principal 3 et le plongeur de blocage 7 sont orientés de manière orthogonale.

Le dispositif 1 de verrouillage de stationnement comporte encore un dispositif anti-rotation 10 configuré pour empêcher la rotation du plongeur principal 3 sur lui-même.

Dans l'exemple décrit, le plongeur de blocage 7 est configuré pour coopérer, dans deux positions de blocage distinctes, avec le plongeur principal 3 pour le bloquer respectivement dans sa position ouverte et sa position fermée illustrée sur la figure 1.

Ces deux positions de blocage distinctes comprennent une position basse qui correspond à la position fermée et une position haute (ou position remontée) qui correspond à la position ouverte du plongeur principal 3.

Le plongeur principal 3 comprend une première forme 11 et une deuxième forme 12, définies ici par deux rainures, distantes suivant l'axe de déplacement D1 de ce plongeur principal 3. Dans un autre mode de réalisation non représenté, les première et deuxième formes sont des trous.

La première forme 11 correspond à l'une des deux positions de blocage du plongeur de blocage 7 sur le plongeur principal 3, à savoir la position haute (ou position remontée) ou la position ouverte du plongeur principal 3.

La deuxième forme 12 correspond à la position basse ou position fermée du plongeur principal 3.

Le plongeur de blocage 7 comporte une tête 14 configurée pour s'engager dans l'une ou l'autre de ces formes 11, 12 du plongeur principal 3 dans les positions de blocage.

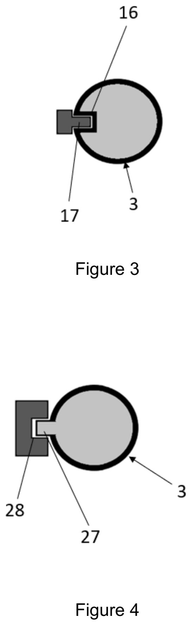

Comme illustré sur la figure 3, le dispositif anti-rotation 10 comprend une gorge 16 (désignée également par « troisième forme ») sur le plongeur principal 3, ici de section circulaire, configurée pour coopérer avec une quatrième forme 17 d'une pièce fixe, ici un pion, de sorte que le plongeur principal 3 puisse être déplacé par la bobine 4 de l'actionneur principal 2 sans permettre une rotation sur lui-même.

En variante, comme illustré sur la figure 4, le plongeur principal 3 comprend une saillie 27 qui coopère avec une fente 28 sur la pièce fixe.

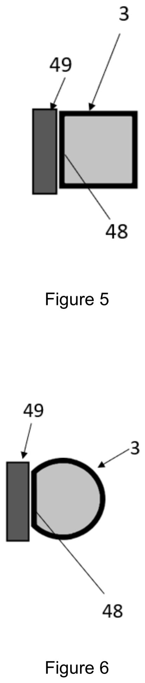

En variante encore, comme illustré sur la figure 5, le plongeur principal 3 peut présenter une section transversale avec un côté droit 48 qui coopère avec une forme en pavé 49 sur la pièce fixe. Dans cet exemple, la section transversale est rectangulaire ou carrée. Un jeu entre le côté droit 48 et la forme 49 permet de rattraper les défauts de positionnement.

En variante encore, comme illustré sur la figure 6, le plongeur principal 3 peut présenter une section transversale avec un côté droit 48 sur une section transversale qui est circulaire en dehors de côté droit 48.

Ainsi, le plongeur principal 3 est une pièce rigide monobloc comprenant à la fois la première forme 11 et/ou la deuxième forme 12 pour la fonction de blocage en position haute et/ou basse, et une troisième forme 16, 27, 48 pour la fonction d'anti-rotation.

Le plongeur de blocage 7 est lui-même maintenu, lorsque l'actionneur de blocage 6 n'est pas alimenté électriquement, en position de blocage par un effort axial suivant un axe de déplacement D2 de ce plongeur de blocage 7 (qui est perpendiculaire à l'axe de déplacement D1 du plongeur principal 3), l'effort axial étant notamment généré par un deuxième ressort 18. Lorsque le plongeur principal 3 se trouve en position indéterminée, le plongeur de blocage 7 s'il n'est pas alimenté peut attendre que le plongeur principal 3 glisse vers sa position ouverte ou fermée avant de translater en position de blocage.

Le plongeur principal 3 comporte un premier doigt 19 configuré pour être déplacé dans un creux 82 de la roue 80 pour bloquer la roue 80 dans la position fermée.

Le premier doigt 19 est réalisé dans le prolongement d'un corps 20 du plongeur principal 3.

Le plongeur principal 3 est formé de plusieurs parties en matériaux différents, les parties étant solidaires entre elles, par exemple avec un matériau pour la partie électromagnétique et un matériau différent pour le premier doigt 19 qui doit notamment résister à des pressions de contact élevées.

De même, le plongeur de blocage 7 est formé de plusieurs parties en matériaux différents, par exemple avec un matériau pour la partie électromagnétique et un matériau différent pour la tête 14 qui doit notamment résister à des pressions de contact élevées.

Dans ce mode de réalisation de la figure 1, le plongeur principal 3 coopère directement avec la roue 80.

Dans l'exemple décrit, le premier doigt 19 du plongeur principal 3 présente une forme allongée suivant l'axe de rotation Xw de la roue 80, cette forme du premier doigt 19 étant notamment de type prismatique.

Dans ce cas, le dispositif anti-rotation 10 est configuré pour maintenir le premier doigt 19 parallèlement au creux 82 de la roue 80 qui présente également une forme allongée complémentaire.

On évite ainsi que le premier doigt 19 de forme allongée ne tourne à droite ou à gauche et ne se retrouve désaligné avec le creux 82 de la roue 80.

Un tel désalignement pourrait empêcher le premier doigt 19 de s'engager dans le creux 82.

Dans l'exemple décrit, l'actionneur principal 2 et l'actionneur de blocage 6 sont de type normalement fermé, à savoir qu'en l'absence d'alimentation électrique, l'actionneur a tendance à déplacer, si c'est l'actionneur principal 2, le plongeur principal 3 en position fermée, et, si c'est l'actionneur de blocage 6, à déplacer le plongeur de blocage 7 dans les positions de blocage.

Pour l'actionneur principal 2 et l'actionneur de blocage 6 de type normalement fermé, l'actionneur principal 2 comprend un premier ressort 21, et l'actionneur de blocage 6 comprend un deuxième ressort 18, qui sont notamment chacun un ressort axial à spires, chaque ressort étant lié au plongeur qui exerce sur le plongeur 3,7 respectif un effort mécanique permanent en vue de le déplacer en position fermée/ position de blocage.

Cet effort mécanique permet de fermer le dispositif 1 de verrouillage de stationnement en poussant le premier doigt 19 dans un creux 82 de la roue 80.

Avec un actionneur principal 2 de type normalement fermé, lorsque l'on se trouve au sommet d'une dent 81, le plongeur principal 3 va se trouver entre les deux positions extrêmes, à savoir entre la position ouverte et la position fermée, puisque la roue 80 n'est pas verrouillée, et le premier ressort 21 permet de mémoriser l'information et attendre que la roue 80 tourne pour que le dispositif 1 se verrouille.

Ainsi on peut sortir du véhicule après avoir coupé le contact, et les deux ressorts 21 et 18 permettent au dispositif 1 de verrouillage de stationnement de se verrouiller mécaniquement sans avoir besoin d'une alimentation électrique.

Ceci permet de garantir des positions maîtrisées et sans consommation électrique superflue.

Le premier doigt 19 qui vient en contact avec les dents 81 de la roue 80 peut avoir une forme en coin (notamment de forme prismatique de section en trapèze), permettant d'éjecter le premier doigt 19 du plongeur principal 3 lorsque le plongeur de blocage 7 n'est pas en position de blocage. La forme en coin est caractérisée par un angle α compris entre 0 et 30°, de préférence 6°. L'angle α est défini entre une facette du doigt venant en appui sur les dents 81 (notamment un appui plan sur plan) et l'axe de déplacement D1 du plongeur principal 3.

Dans une variante, un angle α relativement faible, notamment proche de 0 ou moins, entre 2° et -15° par exemple, de préférence 0°, permettra d'éviter l'ouverture du plongeur principal 3 sous l'effort tangent T et permettra un dégagement sous faible effort du plongeur de blocage 7 (uniquement les efforts de frottement et les efforts dynamiques liés à l'inertie du plongeur de blocage 7) tout en protégeant le plongeur de blocage 7 d'un effort tangent pouvant le cisailler ou l'endommager.

Dans un autre mode de réalisation de l'invention illustré à la figure 2, le plongeur principal 33 est configuré pour coopérer avec un levier 35 qui comporte un deuxième doigt 36 pour être déplacé dans un creux 82 de la roue 80 pour bloquer la roue 80 dans la position fermée du plongeur principal 33, et lorsque le plongeur principal 33 est dans la position ouverte, le levier 35 laisse dégagée la roue 80.

Dans ce cas, le plongeur principal 3 ne coopère pas directement avec la roue 80, mais le levier 35 sert d'intermédiaire entre le plongeur principal 3 et la roue 80.

Le levier 35 présente une forme allongée suivant un axe d'allongement XL et le levier 35 est configuré pour être placé avec son axe d'allongement XL de manière sensiblement orthogonale à l'axe de rotation Xw de la roue 80.

Le levier 35 présente un axe de pivotement XP qui est configuré pour être placé sensiblement parallèle à l'axe de rotation Xw de la roue 80.

Le plongeur principal 33 est configuré pour venir en appui dans une zone d'appui d'extrémité 37 du levier 35, de sorte que l'axe de pivotement XP du levier 35 soit entre cette zone d'appui 37 et le deuxième doigt 36. Le plongeur principal 33 peut pousser ou tirer le levier dans la zone d'appui d'extrémité 37 du levier 35.

Dans cet exemple de la figure 2, le premier ressort 21 de l'actionneur principal 2 est placé sur un côté du plongeur principal 33. Ce premier ressort 21 est configuré pour rappeler le plongeur principal 33 dans la position fermée.

Un ressort additionnel 40 est lié au levier 35 dans une zone à l'opposé de la zone d'appui d'extrémité 37, pour contribuer à ramener le levier 35 dans la position fermée.

Le ressort additionnel 40 pourrait, en variante, être au niveau de la zone d'appui d'extrémité 37 et pousser sur le dessous du levier 35.

Dans l'exemple de la figure 2, à la différence de l'exemple de la figure 1, lorsque le plongeur principal 33 est en position haute, la roue 80 est verrouillée, et lorsque le plongeur principal 33 est en position basse, la roue 80 est dégagée.

Le deuxième doigt 36 du levier 35 qui est configuré pour s'engager sur la roue 80 présente une forme allongée suivant l'axe de rotation Xw de la roue 80, cette forme étant notamment de type prismatique.

Dans ce cas, le levier 35 est avantageusement configuré pour maintenir le deuxième doigt 36 de forme allongée du levier 35 parallèlement au creux 82 de la roue 80 qui présente également une forme allongée complémentaire.

On évite ainsi que le deuxième doigt 36 de forme allongée ne tourne à droite ou à gauche et ne se retrouve désaligné avec le creux 82 de la roue 80.

Un tel désalignement pourrait empêcher le doigt de s'engager dans le creux 82.

Le centre de gravité GR du levier 35 est sur l'axe de pivotement XP du levier 35 pour que le centre de gravité GR du levier 35 soit sur une ligne neutre NL.

Ceci permet que, si le levier 35 reçoit un choc ou une accélération, le levier 35 ne se met pas à tourner, ce qui est une sécurité. On gère ainsi le placement du centre de gravité GR pour que le levier 35 ne puisse pas s'ouvrir tout seul en cas de choc accidentel ou d'une accélération.

Le dispositif 1 de verrouillage de stationnement est configuré pour empêcher le verrouillage pour des vitesses de roulage du véhicule au-delà d'un seuil, notamment un seuil de 4 km/h. Ceci peut être géré de manière électronique, grâce à des capteurs. Les capteurs peuvent être des capteurs du dispositif de verrouillage ou, de préférence, des capteurs du véhicule (en dehors dispositif de verrouillage).

Ces capteurs permettent par exemple de connaître la vitesse du véhicule et pour connaître à quel moment on peut verrouiller ou non.

Chaque actionneur 2, 6 est contrôlé en position par des capteurs physiques tel que des contacteurs 39 illustrés sur les figures 1 et 2, qui détectent les fins de course des plongeurs.

En variante, les actionneurs 2, 6 sont contrôlés en position par un contrôle indirect basé sur des mesures physiques de l'électroaimant de l'actionneur (courant, induction, etc...).

Par exemple, l'actionneur principal 2 et l'actionneur de blocage 6 sont commandés de manière indépendante, par deux électroniques de commande différentes par exemple. L'électronique de commande peut être localisée dans une électronique centralisée extérieure au dispositif 1 de verrouillage de stationnement ou, en variante, être localisée dans le dispositif 1 de verrouillage de stationnement lui-même.

L'arbre de la chaine cinématique est par exemple un arbre d'un rotor de machine électrique, un arbre d'un réducteur ou un différentiel.

## Revendications

1. Dispositif (1) de verrouillage de stationnement pour un véhicule, notamment pour véhicule automobile à entraînement par moteur électrique, ce dispositif (1) de verrouillage de stationnement étant apte à coopérer avec une roue (80) de verrouillage de stationnement qui est solidaire en rotation d'un arbre d'une chaîne cinématique et qui présente une alternance de dents (81) et de creux (82), et ce dispositif (1) de verrouillage de stationnement comportant :
- un actionneur principal (2) de type électromagnétique, comportant un plongeur principal (3) configuré pour être déplacé dans un champ magnétique généré par une bobine (4) de l'actionneur principal (2), le plongeur principal (3) étant configuré pour être déplacé, suivant un axe de déplacement (D1) de ce plongeur principal (3), entre une position ouverte dans laquelle le plongeur principal (3) laisse dégagée la roue (80) et une position fermée dans laquelle le plongeur principal (3) provoque le blocage de la roue (80),
- un actionneur de blocage (6) de type électromagnétique, comportant un plongeur de blocage (7) configuré pour être déplacé dans un champ magnétique généré par une bobine (8) de l'actionneur de blocage (6), le plongeur de blocage (7) étant configuré pour, d'une part, coopérer, dans au moins une position de blocage, avec le plongeur principal (3) ou un éventuel levier (35) actionné par le plongeur principal (3) pour bloquer ce plongeur principal (3) ou cet éventuel levier (35) notamment dans la position fermée, et, d'autre part, dans une position déverrouillée, se désengager du plongeur principal (3) ou de cet éventuel levier (35), cet éventuel levier (35) comportant un deuxième doigt (36) configuré pour être déplacé dans un creux (82) de la roue (80) pour bloquer la roue (80) dans la position fermée du plongeur principal (3), et lorsque le plongeur principal (3) est dans la position ouverte, le levier (35) laisse dégagée la roue (80),
- un dispositif anti-rotation (10) configuré pour empêcher la rotation du plongeur principal (3) sur lui-même.

2. Dispositif selon la revendication précédente, dans lequel le plongeur de blocage (7) est configuré pour coopérer, dans deux positions de blocage distinctes, avec le plongeur principal (3) pour le bloquer respectivement dans sa position ouverte et sa position fermée, notamment ces deux positions de blocage distinctes comprennent notamment une position basse et une position haute du plongeur principal (3).

3. Dispositif selon la revendication précédente, dans lequel le plongeur principal (3) comprend des première et deuxième formes (11, 12), notamment deux rainures ou deux trous, distantes suivant l'axe de déplacement de ce plongeur principal (3), chaque forme correspond à l'une des deux positions de blocage du plongeur de blocage (7) sur le plongeur principal (3), et le plongeur de blocage (7) coopère avec ces formes lorsque le plongeur de blocage (7) se trouve dans l'une ou l'autre des positions de blocage.

4. Dispositif selon l'une des revendications précédentes, dans lequel le dispositif anti-rotation comprend une troisième forme (16, 27, 48), notamment une gorge, sur le plongeur principal (3) configurée pour coopérer avec une quatrième forme (17, 28, 49) d'une pièce fixe, notamment un pion fixe, de sorte que le plongeur principal (3) puisse être déplacé par la bobine de l'actionneur principal (2) sans permettre une rotation sur lui-même.

5. Dispositif selon l'une des revendications précédentes, dans lequel le plongeur de blocage (7) est lui-même maintenu, lorsque l'actionneur de blocage (6) n'est pas alimenté électriquement, en position de blocage par un effort axial suivant un axe de déplacement de ce plongeur de blocage (7), l'effort axial étant notamment généré par un ressort (18).

6. Dispositif selon l'une des revendications précédentes, dans lequel le plongeur principal (3) comporte un premier doigt (19) configuré pour être déplacé dans un creux de la roue (80) pour bloquer la roue (80) dans la position fermée.

7. Dispositif selon la revendication précédente, dans lequel le premier doigt (19) du plongeur principal (3) qui est configuré pour s'engager sur la roue (80) présente une forme allongée suivant l'axe de rotation de la roue (80), cette forme étant notamment de type prismatique.

8. Dispositif selon l'une des revendications 1 à 5, dans lequel le plongeur principal (3) est configuré pour coopérer avec un levier (35) qui comporte un deuxième doigt (36) configuré pour être déplacé dans un creux de la roue (80) pour bloquer la roue (80) dans la position fermée du plongeur principal (3), et lorsque le plongeur principal (3) est dans la position ouverte, le levier (35) laisse dégagée la roue (80), et notamment le levier (35) présente une forme allongée suivant un axe d'allongement (XL) et le levier (35) est configuré pour être placé avec son axe d'allongement de manière sensiblement orthogonale à l'axe de rotation de la roue (80).

9. Dispositif selon la revendication précédente, dans lequel le levier (35) présente un axe de pivotement (XP) et le plongeur principal (3) est configuré pour venir en appui dans une zone d'appui d'extrémité (37) du levier (35), de sorte que l'axe de pivotement du levier (35) soit entre cette zone d'appui et le deuxième doigt (36).

10. Dispositif selon l'une des revendications 6 à 9, dans lequel le premier doigt (19) ou le deuxième doigt (36) apte à être en contact avec les dents (81) de la roue (80) présente une forme en coin et la forme en coin est **caractérisée par** un angle α compris entre 0 et 30°, de préférence 6°, l'angle α étant défini entre une facette du doigt en appui sur les dents (81) et l'axe de déplacement du plongeur principal (3).

11. Dispositif selon l'une des revendications 6 à 9, dans lequel le premier doigt (19) ou le deuxième doigt (36) apte à être en contact avec les dents (81) de la roue (80) présente une forme en coin et la forme en coin est **caractérisée par** un angle α compris entre 2° et -15°, de préférence étant égal 0°.

12. Dispositif selon l'une des revendications précédentes, dans lequel l'actionneur principal (2) et/ou l'actionneur de blocage (6) sont de type normalement fermé, à savoir qu'en l'absence d'alimentation électrique, l'actionneur a tendance à déplacer, si c'est l'actionneur principal (2), le plongeur principal (3) en position fermée, ou, si c'est l'actionneur de blocage (6), à déplacer le plongeur de blocage (7) dans les positions de blocage.

13. Dispositif selon l'une des revendications précédentes, dans lequel les deux actionneurs (2, 6) sont formés par un module commun, étant notamment placés dans un même boîtier du module commun ou étant solidarisé l'un à l'autre pour former le module commun.

14. Système (100) comportant :
- une roue (80) de verrouillage de stationnement qui est solidaire en rotation d'un arbre d'une chaîne cinématique et qui présente une alternance de dents (81) et de creux,
- un dispositif de verrouillage de stationnement selon l'une des revendications précédentes, dont le plongeur principal (3) est pour être déplacé entre la position ouverte dans laquelle le plongeur principal (3) laisse dégagée la roue (80) et une position fermée laquelle le plongeur principal (3) provoque le blocage de la roue (80).

15. Boîte de vitesses comportant un réducteur et un système (100) selon la revendication précédente.
